# EUROPEAN PATENT SPECIFICATION

(11) **EP 3 202 600 B1**
(45) Date of publication and mention of the grant of the patent: **13.03.2019**
(21) Application number: 17151556.2
(22) Date of filing: 16.01.2017
(51) Int. Cl.: B60C 23/04

(54) **TIRE PRESSURE MONITORING SYSTEM**
REIFENDRUCKÜBERWACHUNGSSYSTEM
SYSTÈME DE SURVEILLANCE DE PRESSION DE PNEU

(30) Priority: 20.01.2016 JP 2016008888
(43) Date of publication of application: 09.08.2017
(73) Proprietor: KABUSHIKI KAISHA TOKAI RIKA DENKI SEISAKUSHO, Niwa-gun, Aichi 480-0195 (JP)
(72) Inventor: SHIBATA, Yasuhiro, Niwa-gun, Aichi 480-0195 (JP); TATSUYAMA, Takuji, Niwa-gun, Aichi 480-0195 (JP); KUMAGAI, Katsuhide, Niwa-gun, Aichi 480-0195 (JP); MATSUSHITA, Masahiro, Niwa-gun,Aichi 480-0195 (JP)
(74) Representative: TBK

(56) References cited:
- WO-A1-2015/019149
- WO-A1-2015/098900
- US-A1- 2008 059 029

## Description

The present invention relates to a tire pressure monitoring system.

There is a recent tendency to install a tire pressure monitoring system (TPMS) in a vehicle. The TPMS includes tire air pressure detectors, which are arranged on each tire of the vehicle. Each tire air pressure detector transmits a tire air pressure signal. The vehicle monitors the air pressure of each tire through the tire air pressure signals. When the air pressure of a tire indicates an abnormal value, the vehicle notifies the driver of the tire.

Each tire air pressure detector has a corresponding tire ID (identification code), which is registered to the vehicle in advance. Each tire ID is associated with the position to which the corresponding tire is coupled. This allows the vehicle to detect the one of the mounting positions (right-front tire position, right-rear tire position, left-rear tire position, and left-front tire position) where the abnormal tire is mounted.

For example, Japanese Laid-Open Patent Publication No. 2004-32331 describes a TPMS in which a registration tool switches the receiver of the vehicle to a registration mode. In the registration mode, the tire air pressure detectors are sequentially activated in a predetermined order (e.g., order of right-front tire, right-rear tire, left-rear tire, and left-front tire) to transmit tire air pressure signals including different tire IDs. The vehicle receives the tire air pressure signals from the tire air pressure detectors and sequentially registers the tire IDs. This allows the vehicle to identify the mounting position of the tire to which each tire air pressure detector (more precisely, tire including the tire air pressure detector) is coupled. When an abnormality occurs in the air pressure of a tire, the vehicle notifies the driver of the mounting position of the abnormal tire.

In a case that each tire air pressure detector transmits the tire air pressure signals only when the vehicle is traveling (tires are rotated), the vehicle distinguishes the traveling tires (right-front tire, right-rear tire, left-rear tire, left-front tire) from the spare tire. As for the traveling tires, the vehicle needs to detect whether or not an abnormality has occurred in the air pressure of the tires (pressure abnormality detection) and whether the tire air pressure signal has been received from each tire air pressure detector (failure detection). However, if the vehicle cannot distinguish the spare tire from the other tires, the vehicle cannot determine whether a tire air pressure detector that does not transmit the tire air pressure signal is arranged on one of the traveling tires or the spare tire.

WO 2015/098900 A1 relates to a tire valve registration system comprising: a plurality of tire valves that are respectively installed on a plurality of tires and on a spare tire and that each transmit a radio signal that includes a valve ID and data on tire air pressure; and a receiver that is provided to a vehicle body and that is capable of receiving the radio signal from each of the plurality of tire valves. The system monitors the air pressure of the plurality of tires on the basis of the radio signal transmitted from each of the plurality of tire valves and registers the IDs of the plurality of tire valves at the receiver. The system comprises: a spare tire ID collecting unit that collects, as at least one spare tire candidate ID, the valve ID of at least one radio signal received by the receiver when it is possible to determine that a radio signal has been transmitted from the tire valve of the spare tire; and a spare tire ID confirming unit that confirms the ID of the spare tire by verifying whether the receiver is able, under certain conditions, to continuously receive the at least one spare tire candidate ID collected by the spare tire ID collecting unit, and by narrowing down the at least one spare tire candidate ID on the basis of the verification results.

US2008/0059029 A1 relates to a method of discriminating, while a vehicle is being driven, between the rotating wheels and the nonrotating wheels of said vehicle, each wheel being fitted with an electronic module, said method consisting in transmitting identification request signals to the electronic modules and in commanding, in response, the transmission, by each of said electronic modules, of a signal that includes a parameter identifying said module. This method furthermore consists, upon reception of identification request signals by an electronic module, in calculating the level of reception of said identification request signals and in declaring the corresponding wheel to be a rotating wheel if said level of reception is between 10% and 90%.

In this regard, in addition to the tire ID of each tire air pressure detector, spare tire information indicating that the tire ID corresponds to the spare tire is registered to the vehicle. This allows the vehicle to distinguish and recognize the spare tire from the other tires. In this case, when, for example, the car dealer performs tire rotation to ensure even tire wear, the dealer needs to perform registration again using a tool to update the spare tire information.

It is an object of the present invention to provide a tire pressure monitoring system that is capable of recognizing a spare tire without using a registration tool.

One aspect of the present invention is a tire pressure monitoring system. The tire pressure monitoring system includes a plurality of tire air pressure detectors respectively arranged on a plurality of tires and a receiver arranged on a vehicle body. Each of the tire air pressure detectors is configured to transmit a tire air pressure signal that includes pressure data and a tire ID only when the tire is rotated. The receiver is capable of receiving the tire air pressure signal from each of the tire air pressure detectors. The receiver includes a tire recognition unit configured to perform monitoring whether or not the tire air pressure signal is received from each of the tire air pressure detectors over a number of fixed periods and during each of the fixed periods, obtaining a number of the fixed periods during which the tire air pressure signal is not received for each of the tire air pressure detectors, and recognizing whether each of the tires is a traveling tire or a spare tire based on the number of the fixed periods that is obtained for the corresponding one of the tire air pressure detectors.

The present invention allows for recognition of a spare tire without using a registration tool.

The embodiments, together with objects and advantages thereof, may best be understood by reference to the following description of the presently preferred embodiments together with the accompanying drawings in which:
Fig. 1 is a block diagram showing the structure of a tire pressure monitoring system; and
Fig. 2 is a chart showing an example of signal reception states monitored by a tire recognition unit.

One embodiment of a tire pressure monitoring system will now be described.

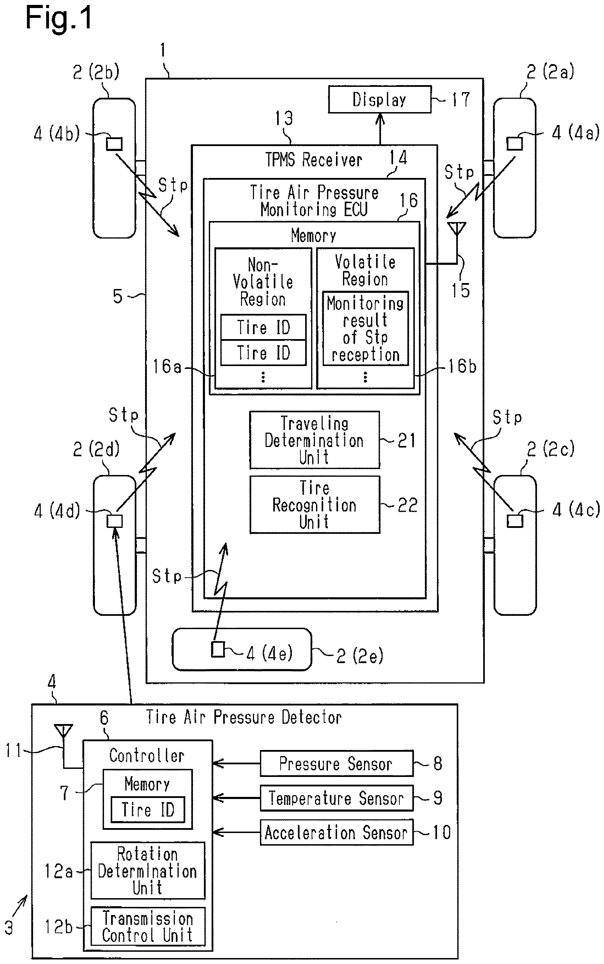

As shown in Fig. 1, a vehicle 1 includes a tire pressure monitoring system 3 that monitors the air pressure or the like of tires 2 (2a to 2e). The tire pressure monitoring system 3 includes tire air pressure detectors 4 (4a to 4e: also referred to as tire valves), which are respectively located on the tires 2a to 2e, a receiver 13 (hereafter, referred to as TPMS receiver), which is located on a vehicle body 5, and a display 17, which is located on the vehicle body 5 and connected to the receiver 13. Each of the tire air pressure detectors 4a to 4e is, for example, located inside a tire to detect the air pressure of the tire and is of a direct type. Each of the tire air pressure detectors 4a to 4e is configured to be capable of transmitting a tire air pressure signal Stp to the vehicle body 5. The tire air pressure signal Stp includes a tire ID and pressure data, which indicates the air pressure of the tire. The display 17 is, for example, installed in an instrument panel located in the passenger compartment. The tires 2a to 2d are mounted on the vehicle body 5 to serve as traveling tires. The tire 2e is mounted in the vehicle as a spare tire.

Each of the tire air pressure detectors 4a to 4e includes a controller 6, a pressure sensor 8, a temperature sensor 9, an acceleration sensor 10 (G sensor), and a transmission antenna 11. The controller 6 is configured to control operation of the corresponding one of the tire air pressure detectors 4a to 4e. The pressure sensor 8 detects the air pressure of the corresponding one of the tires 2a to 2e. The temperature sensor 9 detects the temperature of the corresponding one of the tires 2a to 2e. The acceleration sensor 10 (G sensor) detects the acceleration (rotation) generated in the corresponding one of the tires 2a to 2e. The sensors 8 to 10 are connected to each controller 6. The controller 6 is configured to be capable of transmitting the tire air pressure signal Stp from the transmission antenna 11 using a radio wave of a ultra high frequency (UHF) band.

The controller 6 includes a memory 7, which stores a unique tire ID (also referred to as valve ID) of the corresponding one of the tires 2a to 2e, a rotation determination unit 12a, which is configured to determine whether or not the tire 2 is being rotated based on the detection signal of the acceleration sensor 10, and a transmission control unit 12b, which is configured to transmit the tire air pressure signal Stp to the vehicle body 5 only when the tire is rotated based on the determination result of the rotation determination unit 12a. The rotation determination unit 12a determines that the tire 2 is not being rotated when an acceleration rate detected by the acceleration sensor 10 is less than or equal to a rotation threshold value. The rotation determination unit 12a determines that the tire 2 is being rotated when the detected acceleration rate is greater than the rotation threshold value. The rotation threshold value, which indicates that the tire 2 is not being rotated, is set to be greater than zero in accordance with the detection accuracy of the acceleration sensor 10 or the like. When the rotation determination unit 12a determines that the tire 2 is being rotated, the transmission control unit 12b transmits the tire air pressure signal Stp from the transmission antenna 11. The transmission control unit 12b controls a cycle in which the tire air pressure signal Stp is transmitted. The transmission cycle is a predetermined time interval and, for example, an interval of one minute.

The TPMS receiver 13 is configured to receive the tire air pressure signals Stp from the tire air pressure detectors 4a to 4e and monitor the air pressure of each of the tires 2a to 2e. The TPMS receiver 13 includes a tire air pressure monitoring electronic control unit (ECU) 14, which controls operation of the TPMS receiver 13, and a reception antenna 15, which is capable of receiving radio waves of the UHF band. The tire air pressure monitoring ECU 14 includes a memory 16, a traveling determination unit 21, and a tire recognition unit 22. The memory 16 includes a non-volatile region 16a, which stores (registers) the tire IDs of the tires 2a to 2e, and a volatile region 16b, which temporarily stores monitoring results of the air pressure of each of the tires 2a to 2e.

When receiving a tire air pressure signal Stp from one of the tire air pressure detectors 4a to 4e with the reception antenna 15, the tire air pressure monitoring ECU 14 verifies the tire ID of the tire air pressure signal Stp with tire IDs that are stored in the non-volatile region 16a of the memory 16. When the ID verification is accomplished, the tire air pressure monitoring ECU 14 checks the pressure data of the tire air pressure signal Stp. When the air pressure of the tire 2 obtained from the pressure data is less than or equal to a low pressure threshold value, the tire air pressure monitoring ECU 14 indicates on the display 17 that an abnormality has occurred in one of the tires 2a to 2e. Whenever receiving a tire air pressure signal Stp, the tire air pressure monitoring ECU 14 monitors the air pressure of the corresponding one of the tires 2a to 2e.

The traveling determination unit 21 is configured to detect whether or not the vehicle 1 is traveling. The traveling determination unit 21 obtains vehicle speed information (vehicle speed data), for example, from a meter ECU or a vehicle speed sensor. When the vehicle speed information indicates that the vehicle speed is higher than or equal to a predetermined vehicle speed, the traveling determination unit 21 determines that the vehicle 1 is traveling. When the vehicle speed is lower than the predetermined vehicle speed, the traveling determination unit 21 determines that the vehicle 1 is not traveling. The predetermined vehicle speed indicates that the vehicle 1 is traveling and is set to, for example, approximately 5 to 30 km/h taking into consideration the accuracy of the vehicle speed information obtained from the meter ECU or the like.

The tire recognition unit 22 is configured to recognize whether each of the tires 2a to 2e is a traveling tire or a spare tire based on the reception state of the tire air pressure signals Stp when the vehicle is traveling. When the traveling determination unit 21 determines that the vehicle 1 has started to travel, the tire recognition unit 22 monitors whether or not the tire air pressure signals Stp are received from the tires 2a to 2e during each fixed period and temporarily stores the monitoring results in the volatile region 16b of the memory 16. The tire recognition unit 22 recognizes whether each of the tires 2a to 2e is a traveling tire or a spare tire based on the number of periods during which the tire air pressure signal Stp is not received for each of the tires 2a to 2e.

The tire recognition unit 22 sets, for example, eight fixed periods. Each fixed period is set to seventy seconds, which is longer than the transmission cycle (interval of one minute) in which each tire air pressure detector 4 transmits the tire air pressure signal Stp. Thus, if the tire air pressure signal Stp is not received from one of the tire air pressure detectors 4a to 4e corresponding to the traveling tires during a period of time from when the vehicle 1 starts to travel until the eighth period ends, the tire air pressure monitoring ECU 14 indicates on the display 17 that a failure has occurred in the tire air pressure detector 4 from which the tire air pressure signal Stp was not received.

The operation of the tire pressure monitoring system 3 will now be described.

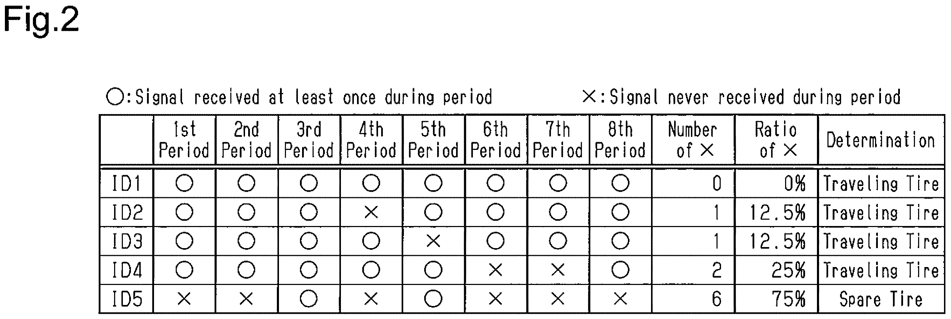

In Fig. 2, the eight fixed periods during which the tire recognition unit 22 monitors the reception of the tire air pressure signal Stp are referred to in order from "the first period" to "the eighth period." The first to eight periods are each set to, for example, seventy seconds. The tire recognition unit 22 monitors whether or not the tire air pressure signal Stp is received from the tire air pressure detector 4 of each of the tires 2a to 2e during each period and temporarily stores the monitoring result for the period in the volatile region 16b of the memory 16. Fig. 2 shows an example of a table of the monitoring results for each period that is stored in the volatile region 16b of the memory 16 by the tire recognition unit 22. In the table shown in Fig. 2, horizontal items are set to the first to eighth periods, and vertical items are set to "ID1" to "ID5," which are five tire IDs that have been registered in the non-volatile region 16a of the memory 16. The table includes matrix cells, each of which stores the corresponding monitoring result. For the sake of simplicity, in the table of Fig. 2, the monitoring result is indicated by "o" when the tire air pressure signal Stp is received one or more times, and indicated by "x" when the tire air pressure signal Stp is never received. For example, the first period shows that the tire air pressure signals Stp are received from the four tire air pressure detectors 4 corresponding to the tire IDs ID1 to ID4. However, the tire air pressure signal Stp is not received from the tire air pressure detector 4 corresponding to the tire ID of ID5.

When the tire recognition unit 22 completes the monitoring of the final eighth period, the tire recognition unit 22 counts the number of the fixed periods during which the tire air pressure signal Stp is not received (number of "x") for each tire ID and calculates the ratio of the number of fixed periods (number of "x") during which the tire air pressure signal Stp is not received for each tire ID to the number of fixed periods (in present example, eight) in which the monitoring is performed. The tire recognition unit 22 determines for each tire ID whether or not the calculated ratio is greater than or equal to a fixed ratio (e.g., 2/3 (66.6%)). The tire recognition unit 22 recognizes the tire 2 corresponding to the tire ID of which the calculated ratio is determined to be greater than or equal to the fixed ratio as a spare tire. The tire recognition unit 22 recognizes the tire 2 corresponding to the tire ID of which the calculated ratio is determined to be less than the fixed ratio as a traveling tire. In the present example, the tire 2 corresponding to the tire ID of ID5 is recognized as the spare tire, and the tires 2 corresponding to the tire IDs ID1 to ID4 are recognized as the traveling tires.

Among the tires 2, when one spare tire is distinguished from the other four traveling tires, the tire recognition unit 22 recognizes the spare tire. In the present example, the tire 2 corresponding to the tire ID of ID5 is recognized as the spare tire and distinguished from the traveling tires. Consequently, when the tire air pressure signal Stp is not received from one of the traveling tires during the period of time from when the vehicle 1 starts to travel until the monitoring of the eighth period is completed, the display 17 indicates that a failure has occurred in the tire air pressure detector 4. More specifically, a failure in a traveling tire is detected while differentiating the traveling tire having the failure from the spare tire, which does not send the tire air pressure signal Stp. In the present example, the time from when the vehicle 1 starts to travel until the monitoring of the eighth period is completed is 560 seconds (9 minutes and 20 seconds). Thus, if a failure occurs in a traveling tire, the failure alert may be shown in the display 17 within a specified time (e.g., 9 minutes 30 seconds to 10 minutes from when the vehicle 1 starts to travel). In the present example, the tire air pressure signals Stp are received from all of the four traveling tires one or more times before the monitoring of the eighth period is completed. This indicates that no failure has occurred in the traveling tires.

As long as the tires having the tire IDs of ID1 to ID5 are the traveling tires and the spare tire, even when tire rotation is performed, the spare tire may be recognized without using a registration tool by monitoring the reception states of the tire air pressure signals Stp when the vehicle 1 is traveling.

Accordingly, the present embodiment has the advantages described below.
(1) When the vehicle 1 is traveling (tires are rotated), the traveling tires cyclically transmit the tire air pressure signal Stp, whereas the spare tire does not transmit (or rarely transmits when vibration or the like occurs) the tire air pressure signal Stp. This point is focused on, and the traveling tires and the spare tire are recognized based on the reception state of the tire air pressure signal Stp. This allows for recognition of the spare tire without using a registration tool.
(2) The number of times when the tire air pressure signal Stp is not received is counted. If the number of times when the tire air pressure signal Stp is received is counted, the number of count may be considerably increased when a large number of tire air pressure signals Stp are temporarily received, which causes an erroneous determination. Such erroneous determination is prevented.
(3) The tire recognition unit 22 recognizes a tire as a spare tire when the ratio of the number of the fixed periods, during which the tire air pressure signal Stp is not received from the tire, to the number of the fixed periods, in which the tire recognition unit 22 monitors whether or not the tire air pressure signal Stp is received from the tire, is greater than or equal to the fixed ratio. This configuration allows for recognition of the spare tire with high accuracy.
(4) When the number of the fixed periods, in which the tire recognition unit 22 monitors whether or not the tire air pressure signal Stp is received, reaches a specified number (in present example, eight), the tire recognition unit 22 recognizes a tire as the spare tire when the ratio of the number of the fixed periods, during which the tire air pressure signal Stp is not received from the tire, to the specified number is greater than or equal to the above fixed ratio. In this configuration, even when the tire air pressure signal Stp is transmitted caused by vibration or the like at an early stage (e.g., first period), which indicates that the ratio is 0% at this stage, the monitoring is continued. When the ratio of the number of times when the tire air pressure signal Stp is not received becomes greater than or equal to the fixed ratio, the corresponding tire is recognized as the spare tire.
(5) The tire recognition unit 22 recognizes the spare tire when, among the five tires, one spare tire is distinguished from the other four traveling tires based on the number of times when the tire air pressure signal Stp is not received. This eliminates situations in which a traveling tire having a failure is erroneously determined to be a spare tire.
(6) The fixed period (in present example, seventy seconds) is set to be longer than the transmission cycle (in present example, interval of one minute), in which the tire air pressure detector 4 transmits the tire air pressure signal Stp. When the tire air pressure signal Stp was never received during the fixed period, the fixed period is counted as the fixed period during which the tire air pressure signal Stp is not received. In this configuration, the spare tire is distinguished with high accuracy based on the number of times (number of "x") when the tire air pressure signal Stp was never received during the fixed period, in which the tire air pressure signals Stp are expected to be received from the traveling tires having no failure.

The above embodiment may be modified as follows.

In the above embodiment, among the plurality of tires, the spare tire is distinguished from the traveling tires. The mounting positions (right-front tire position, right-rear tire position, left-rear tire position, left-front tire position) of the traveling tires may be recognized but do not necessarily have to be recognized.

In the embodiment, the eight fixed periods are used, and each fixed period is set to seventy seconds. The number of the fixed periods and the length of each fixed period are not limited. The number of the fixed periods (eight in embodiment) and the length of each fixed period (seventy seconds in embodiment) may be changed, for example, so as to indicate the failure alert of a traveling tire within the specified time (e.g., ten minutes from when the vehicle 1 starts to travel) taking into consideration the transmission cycle (interval of one minute in embodiment), in which the tire air pressure detector 4 transmits the tire air pressure detector 4. Additionally, the fixed ratio (2/3 (66.6%) in embodiment) for recognizing the spare tire and the timing (at time of completing eighth period in embodiment) for calculating the ratio of the fixed periods during which the tire air pressure signal Stp is not received may be changed.

A tire pressure monitoring system includes tire air pressure detectors (4), arranged on tires (2) and configured to transmit a tire air pressure signal including pressure data and a tire ID only when the tire is rotated, and a receiver (13), arranged on a vehicle body (5) and capable of receiving the signal from each tire air pressure detector (4). The receiver (13) includes a tire recognition unit (22) configured to monitor whether or not the signal is received from each tire air pressure detector (4) over fixed periods and during each fixed period, obtain a number of the fixed periods during which the signal is not received for each tire air pressure detector (4), and recognize whether each tire is a traveling tire or a spare tire based on the number of the fixed periods that is obtained for the corresponding tire air pressure detector (4).

## Claims

1. A tire pressure monitoring system comprising:
a plurality of tire air pressure detectors (4) respectively arranged on a plurality of tires, wherein each of the tire air pressure detectors (4) is configured to transmit a tire air pressure signal that includes pressure data and a tire ID only when the tire is rotated; and
a receiver (13) arranged on a vehicle body and capable of receiving the tire air pressure signal from each of the tire air pressure detectors (4), wherein the receiver (13) includes a tire recognition unit (22) configured to perform
monitoring whether or not the tire air pressure signal is received from each of the tire air pressure detectors (4) over a number of fixed periods and during each of the fixed periods,
obtaining a number of the fixed periods during which the tire air pressure signal is not received for each of the tire air pressure detectors (4), and
recognizing whether each of the tires is a traveling tire or a spare tire based on the number of the fixed periods that is obtained for the corresponding one of the tire air pressure detectors (4).

2. The tire pressure monitoring system according to claim 1, wherein the recognizing whether each of the tires is a traveling tire or a spare tire based on the number of the fixed periods that is obtained for the corresponding one of the tire air pressure detectors (4) includes
calculating a ratio of the number of the fixed periods during which the tire air pressure signal is not received to a number of the fixed periods during which the monitoring is performed for each of the tire air pressure detectors (4),
determining whether or not the calculated ratio is greater than or equal to a fixed ratio for each of the tire air pressure detectors (4), and
recognizing a tire corresponding to the tire air pressure detector (4) of which the calculated ratio is determined to be greater than or equal to the fixed ratio as the spare tire.

3. The tire pressure monitoring system according to claim 2, wherein the calculating a ratio includes, when the number of the fixed periods during which the monitoring is performed reaches a specified number, calculating a ratio of the number of the fixed periods during which the tire air pressure signal is not received to the specified number for each of the tire air pressure detectors (4).

4. The tire pressure monitoring system according to any one of claims 1 to 3, wherein
the plurality of tires includes five tires, and
the tire recognition unit (22) is further configured to recognize the spare tire when, among the five tires, one spare tire is distinguished from the other four traveling tires.

5. The tire pressure monitoring system according to any one of claims 1 to 4, wherein
each fixed period is set to be longer than a cycle in which each of the tire air pressure detectors (4) transmits the tire air pressure signal, and
the monitoring whether or not the tire air pressure signal is received from each of the tire air pressure detectors (4) during each fixed period includes counting a number of the fixed periods during which the tire air pressure signal was never received for each of the tire air pressure detectors (4).

## Patentansprüche

1. Reifendrucküberwachungssystem mit
einer Vielzahl von Reifenluftdruckdetektoren (4), die jeweils an einer Vielzahl von Reifen angeordnet sind, wobei jeder der Reifenluftdruckdetektoren (4) eingerichtet ist, ein Reifenluftdrucksignal, das Druckdaten und eine Reifen-ID enthält, nur dann zu übertragen, wenn der Reifen gedreht wird, und
einem Empfänger (13), der an einer Fahrzeugkarosserie angeordnet und in der Lage ist, das Reifenluftdrucksignal von jedem der Reifenluftdruckdetektoren (4) zu empfangen, wobei der Empfänger (13) eine Reifenerkennungseinheit (22) enthält, die dazu eingerichtet ist,
zu überwachen, ob das Reifenluftdrucksignal von jedem der Reifenluftdruckdetektoren (4) über eine Anzahl festgelegter Zeitabschnitte und während jeder der festgelegten Zeitabschnitte empfangen wird oder nicht,
eine Anzahl von festgelegten Zeitabschnitten zu erlangen, in denen das Reifenluftdrucksignal nicht von jedem der Reifenluftdruckdetektoren (4) empfangen wird, und
zu erkennen, ob jeder der Reifen ein Laufreifen oder ein Ersatzreifen ist, basierend auf der Anzahl der festgelegten Zeitabschnitte, die für den entsprechenden der Reifenluftdruckdetektoren (4) erlangt wurde.

2. Reifendrucküberwachungssystem nach Anspruch 1, wobei das Erkennen, ob jeder der Reifen ein Laufreifen oder ein Ersatzreifen ist, auf der Anzahl der festgelegten Zeitabschnitte basiert, die für den entsprechenden der Reifenluftdruckdetektoren (4) erlangt wurde, enthält
Berechnen eines Verhältnisses der Anzahl der festgelegten Zeitabschnitte, während denen das Reifenluftdrucksignal nicht empfangen wird, zu einer Anzahl festgelegter Zeitabschnitten, während denen die Überwachung für jeden der Reifenluftdruckdetektoren (4) durchgeführt wird,
Bestimmen, ob das berechnete Verhältnis größer oder gleich einem festgelegten Verhältnis für jeden der Reifenluftdruckdetektoren (4) ist oder nicht, und
Erkennen eines Reifens als den Ersatzreifen, dem Reifenluftdruckdetektor (4) entsprechend, von dem das berechnete Verhältnis als größer oder gleich dem festgelegten Verhältnis bestimmt wurde.

3. Reifendrucküberwachungssystem nach Anspruch 2, wobei das Berechnen eines Verhältnisses enthält, wenn die Anzahl der festgelegten Zeitabschnitte, während die Überwachung durchgeführt wird, eine bestimmte Anzahl erreicht, Berechnen eines Verhältnisses der Anzahl der festgelegten Zeitabschnitte, während denen das Reifenluftdrucksignal nicht empfangen wird, zu der bestimmten Anzahl, für jeden der Reifenluftdruckdetektoren (4).

4. Reifendrucküberwachungssystem nach einem der Ansprüche 1 bis 3,
wobei
die Vielzahl von Reifen fünf Reifen enthält, und
die Reifenerkennungseinheit (22) des Weiteren eingerichtet ist den Ersatzreifen zu erkennen, wenn unter den fünf Reifen ein Ersatzreifen von den anderen vier Laufreifen unterschieden wird.

5. Reifendrucküberwachungssystem nach einem der Ansprüche 1 bis 4, wobei
jede festgelegte Zeitspanne eingestellt ist länger als ein Zyklus zu sein, in dem jeder der Reifenluftdruckdetektoren (4) das Reifenluftdrucksignal überträgt, und
das Überwachen, ob das Reifenluftdrucksignal von jedem der Reifenluftdruckdetektoren (4) während jeder festgelegten Zeitspanne empfangen wird oder nicht, das Zählen einer Anzahl von festgelegten Zeitabschnitten enthält, während denen das Reifenluftdrucksignal niemals für jeden der Reifenluftdruckdetektoren (4) empfangen wurde.

## Revendications

1. Système de surveillance de pression de pneu comprenant :
une pluralité de détecteurs de pression d'air de pneu (4) respectivement agencés sur une pluralité de pneus, dans lequel chacun des détecteurs de pression d'air de pneu (4) est configuré pour transmettre un signal de pression d'air de pneu qui inclut des données de pression et un identifiant de pneu uniquement lorsque le pneu tourne ; et
un récepteur (13) agencé sur un corps de véhicule et capable de recevoir le signal de pression d'air de pneu provenant de chacun des détecteurs de pression d'air de pneu (4), dans lequel le récepteur (13) inclut une unité de reconnaissance de pneu (22) configurée pour
surveiller si le signal de pression d'air de pneu est reçu ou non en provenance de chacun des détecteurs de pression d'air de pneu (4) sur un nombre de périodes fixes et durant chacune des périodes fixes,
obtenir nombre des périodes fixes durant lesquelles le signal de pression d'air de pneu n'est pas reçu pour chacun des détecteurs de pression d'air de pneu (4), et
reconnaître si chacun des pneus est un pneu qui roule ou un pneu de secours sur la base du nombre des périodes fixes qui est obtenu pour le détecteur correspondant des détecteurs de pression d'air de pneu (4).

2. Système de surveillance de pression de pneu selon la revendication 1, dans lequel le fait de reconnaître si chacun des pneus est un pneu qui roule ou un pneu de secours sur la base du nombre des périodes fixes qui est obtenu pour le détecteur correspondant des détecteurs de pression d'air de pneu (4) inclut
le calcul d'un rapport du nombre des périodes fixes durant lesquelles le signal de pression d'air de pneu n'est pas reçu sur un nombre des périodes fixes durant lesquelles la surveillance est effectuée pour chacun des détecteurs de pression d'air de pneu (4),
le fait de déterminer si le rapport calculé est ou non supérieur ou égal à un rapport fixe pour chacun des détecteurs de pression d'air de pneu (4), et
la reconnaissance d'un pneu correspondant au détecteur de pression d'air de pneu (4) dont le rapport calculé est déterminé comme étant supérieur ou égal au rapport fixe comme un pneu de secours.

3. Système de surveillance de pression de pneu selon la revendication 2, dans lequel le calcul d'un rapport inclut, quand le nombre des périodes fixes durant lesquelles la surveillance est effectuée atteint un nombre spécifié, le calcul d'un rapport du nombre des périodes fixes durant lesquelles le signal de pression d'air de pneu n'est pas reçu sur le nombre spécifié pour chacun des détecteurs de pression d'air de pneu (4).

4. Système de surveillance de pression de pneu selon l'une quelconque des revendications 1 à 3, dans lequel
la pluralité de pneus inclut cinq pneus, et
l'unité de reconnaissance de pneu (22) est en outre configurée pour reconnaître le pneu de secours quand, parmi les cinq pneus, un pneu de secours est différencié des quatre autres qui roulent.

5. Système de surveillance de pression de pneu selon l'une quelconque des revendications 1 à 4, dans lequel
chaque période fixe est réglée pour être plus longue qu'un cycle dans lequel chacun des détecteurs de pression d'air de pneu (4) transmet le signal de pression d'air de pneu, et
le fait de surveiller si le signal de pression d'air de pneu est reçu ou non en provenance de chacun des détecteurs de pression d'air de pneu (4) durant chaque période fixe inclut le comptage d'un nombre des périodes fixes durant lesquelles le signal de pression d'air de pneu n'a jamais été reçu pour chacun des détecteurs de pression d'air de pneu (4).
